# EUROPEAN PATENT SPECIFICATION

(11) **EP 1 883 222 B1**
(45) Date of publication and mention of the grant of the patent: **25.01.2017**
(21) Application number: 07013106.5
(22) Date of filing: 04.07.2007
(51) Int. Cl.: H04N 1/60

(54) **Image data output device, printing device, printing system, image data output program and its installation program**
Bilddatenausgabevorrichtung, Druckvorrichtung, Drucksystem, Bilddatenausgabeprogramm und Installationsprogramm dafür
Dispositif de sortie de date d'image, dispositif d'impression, système d'impression, programme de sortie de données d'images et son programme d'installation

(30) Priority: 25.07.2006 JP 2006202091
(43) Date of publication of application: 30.01.2008
(73) Proprietor: Brother Kogyo Kabushiki Kaisha, Nagoya-shi, Aichi-ken 467-8561 (JP)
(72) Inventor: Yamanaka, Tsuyoshi c/o Brother Kogyo Kabushiki Kaisha, Nagoya-shi Aichi-ken 467-8561 (JP); Miyata, Yuji c/o Brother Kogyo Kabushiki Kaisha, Nagoya-shi Aichi-ken 467-8561 (JP)
(74) Representative: Kuhnen & Wacker

(56) References cited:
- EP-A1- 1 669 871
- JP-A- 2004 007 300
- US-A- 5 408 342
- US-A1- 2006 066 925

## Description

The present disclosure relates to an image data output device, a printing device, a printing system, an image data output program and its installation program.

In recent years, a technique has been proposed that allows a user to adjust the image quality of an image to be outputted on a PC when outputting the image data to a printing device (such as a color printer) to print the image data. The technique works to allow, for example, the user to previously save multiple sets of image quality adjustment values (parameters) of various types through a printer driver; if the user selects a desired set of image quality adjustment values to execute the printing, image data is adjusted depending on the selected image quality adjustment values and printing is performed based on the adjustment.

There is also another technique known to realize the following. That is, if a sample image is prepared beforehand in a printer driver, the image quality of the sample image is adjusted for display depending on image quality adjustment values when a user inputs the values, so that the result (effects) of the printing by the user using the image quality adjustment values can be easily exhibited.

The US 2006/0066925 A1 discloses an image forming apparatus including an input unit that receives input of area designation information designating an image area to be subjected to color adjustment and adjustment amount information designating an adjustment amount of color adjustment, a color adjustment unit that performs color adjustment on rasterized image data in correspondence with the inputted area designation information and the adjustment amount information, and an image forming unit that forms an output image based on the image data subjected to the color adjustment by the color adjustment unit.

However, in accordance with the above techniques, effects of the image quality adjustment on image data that a user actually desires to print are not always appropriately exhibited since a predetermined sample image is used for the image quality adjustment.

In view of the above circumstances there is a need in the art for an image data output device, a printing device, a printing system, an image data output program and its installation program that can perform the image quality adjustment more appropriately.

According to one illustrative aspect of the present invention, an image data output device includes, a setting part that can set adjustment values, an adjusting part that adjusts the image quality of image data based on the adjustment values being set by the setting part, a choosing part that can choose the image data, a display part that can display an image to preview adjustment effects for the image data chosen by the choosing part, wherein the image quality has been adjusted by the adjusting part, and a data outputting part can output the image data to be a print target to the printing device, and the image quality of the image data has been adjusted by the adjusting part.

Illustrative aspects in accordance with the invention will be described in detail with reference to the following figures wherein:
FIG. 1 is a block diagram showing system configuration in accordance with an illustrative aspect of the present invention;
FIG. 2 is a flowchart showing the flow of print processing by a printer driver;
FIG. 3 is a diagram illustrating detailed parameter setting values;
FIG. 4 is a diagram showing a print setting screen;
FIG. 5 is a diagram illustrating contents of saved data;
FIG. 6 is a flowchart showing the flow of custom setting processing;
FIG. 7 is a flowchart showing the flow of the custom setting processing;
FIG. 8 is a diagram showing a custom setting screen;
FIG. 9 is a flowchart showing the flow of export processing;
FIG. 10 is a diagram briefly illustrating contents of a setting information file;
FIG. 11 is a flowchart showing the flow of import processing; and
FIG. 12 is a flowchart showing the flow of an installation processing by an installation program.

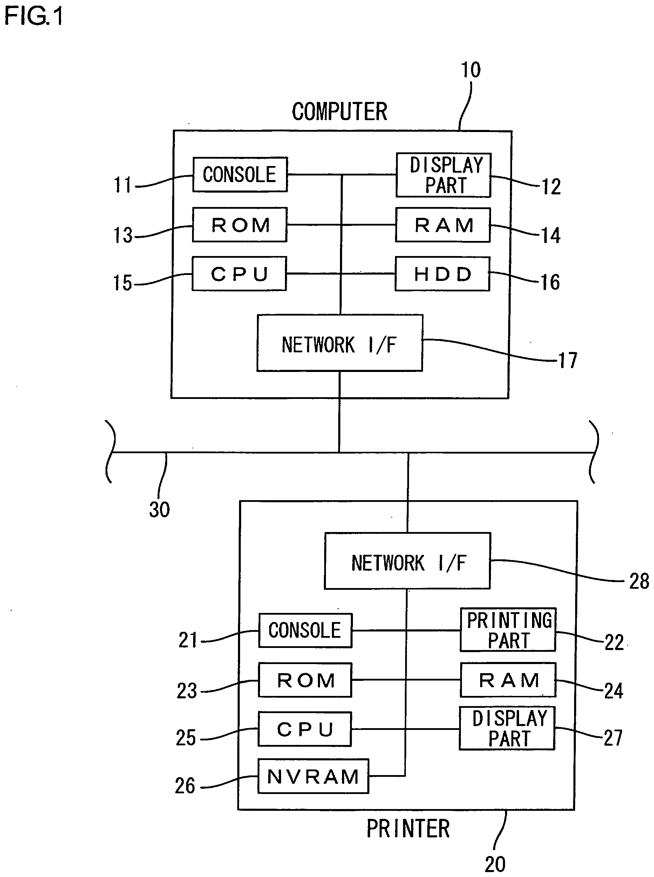

An illustrative aspect of the present invention will be described with reference to FIGS. 1 to 12.

### 1. General Configuration

FIG. 1 is a block diagram showing the configuration of a printing system in accordance with this illustrative aspect. As shown in the drawing, the printing system consists of one or more computers (an example of image data output devices) and one or more printers (an example of printing devices) connected via a network 30 such as a LAN.

### (Computer)

A computer 10 is configured to comprise a console 11 (an example of a "setting part" or a "choosing part") for accepting an input operation from the outside such as a keyboard or a mouse, a display part 12 (an example of a "display part") such as an LCD display, a ROM 13, a RAM 14, a CPU 15 (an example of an "adjusting part", a "setting information outputting part", a "setting information inputting part" or a "trial printing part"), a memory or a hard disk drive 16 (an example of a "saving part"), a network interface 17 (an example of a "data outputting part") and the like. The hard disk drive 16 stores a printer driver (an example of an "image data output program") or other application software described below. The CPU 15 reads out the printer driver and others from the hard disk drive 16 for execution based on an execution direction from the console 11.

### (Printer)

A printer 20 is configured to comprise a console 21 consisting of various types of keys and others, a printing part 22 (an example of a "printing part") for printing on a recording medium (such as a paper sheet), a ROM 23, a RAM 24, a CPU 25, a NVRAM (non-volatile memory) 26 (an example of a "storage region"), a display part 27 such as an LCD display, a network interface 28 and the like. The CPU 25 controls the other parts in accordance with a program stored in the ROM 23.

### 2. Detailed Processing by a Printer Driver

### (Print Processing)

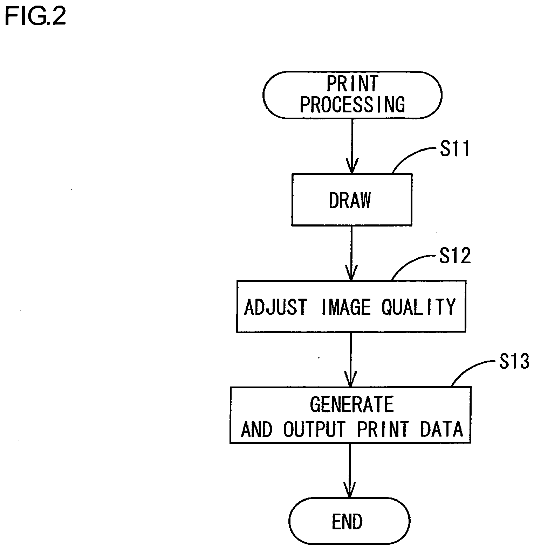

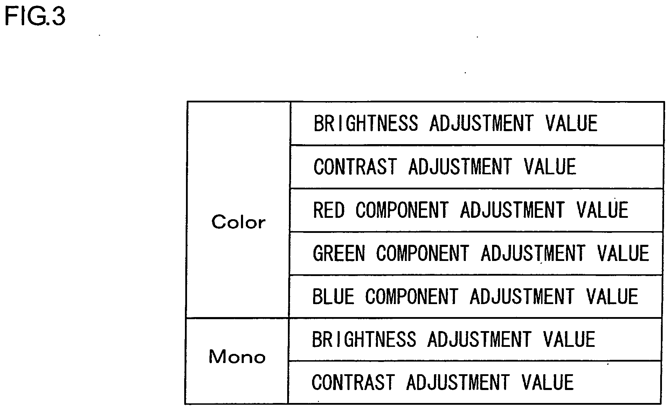

FIG. 2 is a flowchart showing the flow of print processing, while FIG. 3 is a diagram illustrating detailed parameter setting values. When a user inputs a print indication using the console 11, a printer driver is loaded onto the RAM 14 in accordance with control by the CPU 15 and executes the print processing. When the CPU 15 starts the print processing, first it reads data (composed of objects such as a text, a figure or a photograph) to be printed and performs drawing processing to generate image data in a bit map format based on the data (S11).

Subsequently, the image quality of the image data is adjusted based on parameter setting values stored on the hard disk drive 16 (S12). The parameter setting values are set in print setting processing described below. The parameter setting values (a set of adjustment values) can corresponding to various parameters to adjust the image quality of brightness, contrast, a red component, a green component and a blue component in the case of color, while it include adjustment values (a set of adjustment values) corresponding to two parameters of brightness and contrast in the case of monochrome, as shown in FIG. 3.

Next, image data with adjusted image quality undergoes processing such as color conversion to convert RGB data into CMYK data or compression, for example, to generate print data, and then the print data is sent and outputted to the printer 20 via the network interface 17 (S13). When the printer 20 receives the print data, it prints and outputs an image corresponding to the print data on a recording medium using the printing part 22.

### (Print Setting Processing)

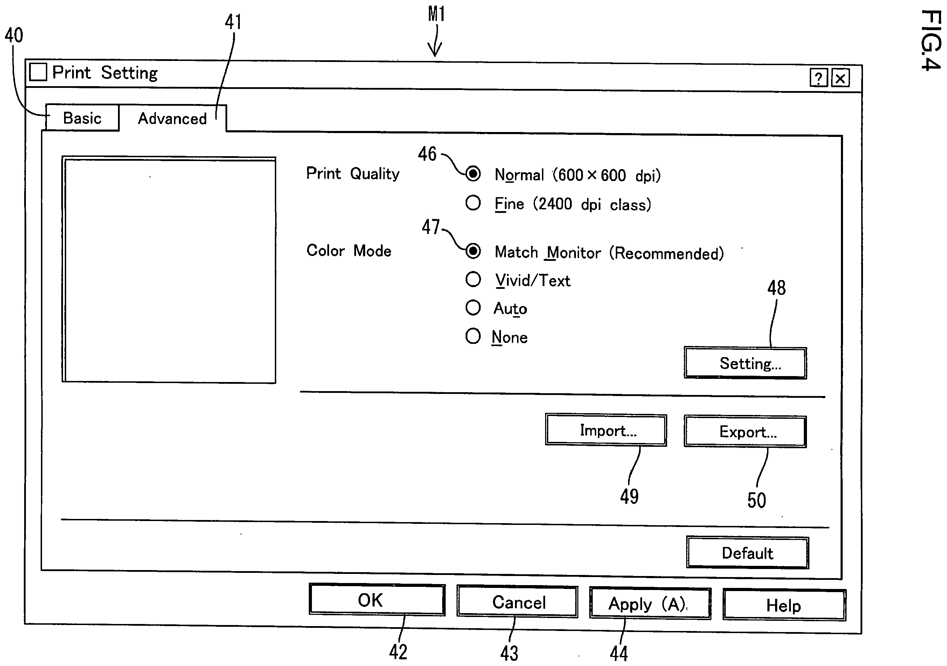

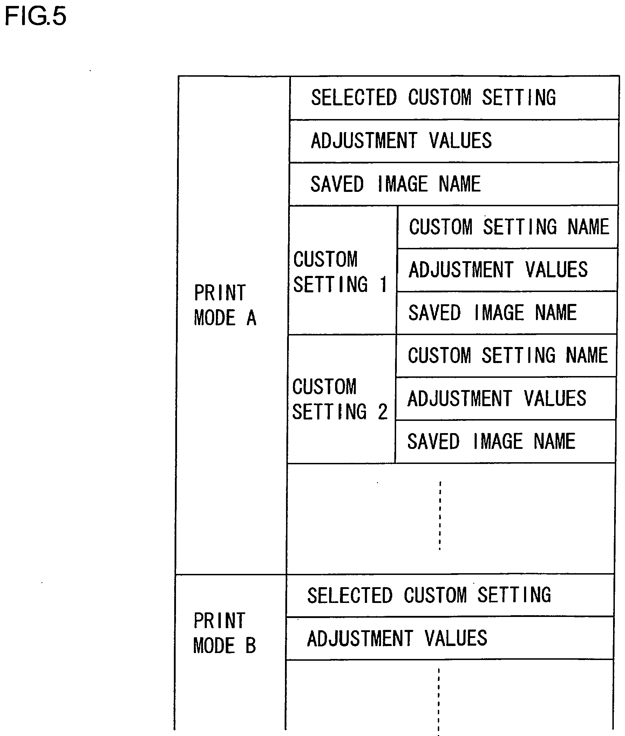

FIG. 4 is a diagram showing a print setting screen M1, while FIG. 5 is a diagram illustrating contents of saved data. When the user inputs a print setting direction from the console 11 in accordance with the control by the CPU 15, the printer driver is loaded onto the RAM 14, executes the print setting processing, and displays the print setting screen M1 shown in FIG. 4 on the display part 12. The print setting screen M1 is configured to display a basic setting tab 40 and an advanced function tab 41 by switching between them. At the bottom of the screen, there are provided an OK button 42, a cancel button 43, an apply button 44 and the like.

On the basic setting tab 40, there are provided setting items such as the paper sheet size, layout, the number of copies and color/monochrome, although not shown in detail. On the advanced function tab 41, there are provided two option buttons 46 to select the resolution, four option buttons 47 to select a color mode, a custom setting button 48, an import button 49, an export button 50 and the like.

In this aspect, driver setting information used by the printer driver is stored on the hard disk 16. The driver setting information contains the above described parameter setting values used in the print processing as shown in FIG. 3 or saved data shown in FIG. 5. The saved data contains information of a set of adjustment values corresponding to multiple kinds of print modes selected based on a combination of settings of color/monochrome, resolution and a color mode that can be selected in the print setting processing. The saved data also contains custom setting selected for each of the print modes, a saved image name of image data (including position information of the image data) used for display of an image to preview adjustment effects, as well as a custom setting name, a set of adjustment values and a saved image name of the image data corresponding to the custom setting saved for each of the print modes, whose details will be described below.

When the apply button 44 is clicked on the print setting screen M1, setting details of the setting items are established. At this time, adjustment values in a set of adjustment values corresponding to a print mode selected by a user are read from the saved data and set as parameter setting values.

When the OK button 42 is clicked on the print setting screen M1, the setting detail of setting items are established, the screen closes, and the print setting processing ends. Otherwise, when the cancel button 43 is clicked, the setting details are not established and the print setting processing ends. An operation when the custom setting button 48, the import button 49 or the export button 50 is clicked will be described below.

### (Custom Setting Processing)

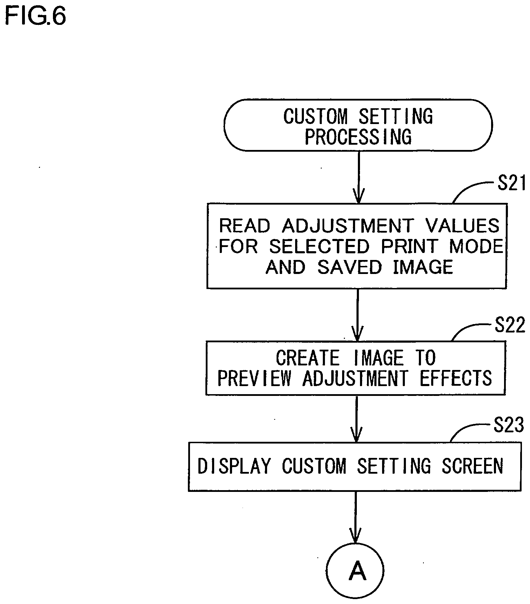

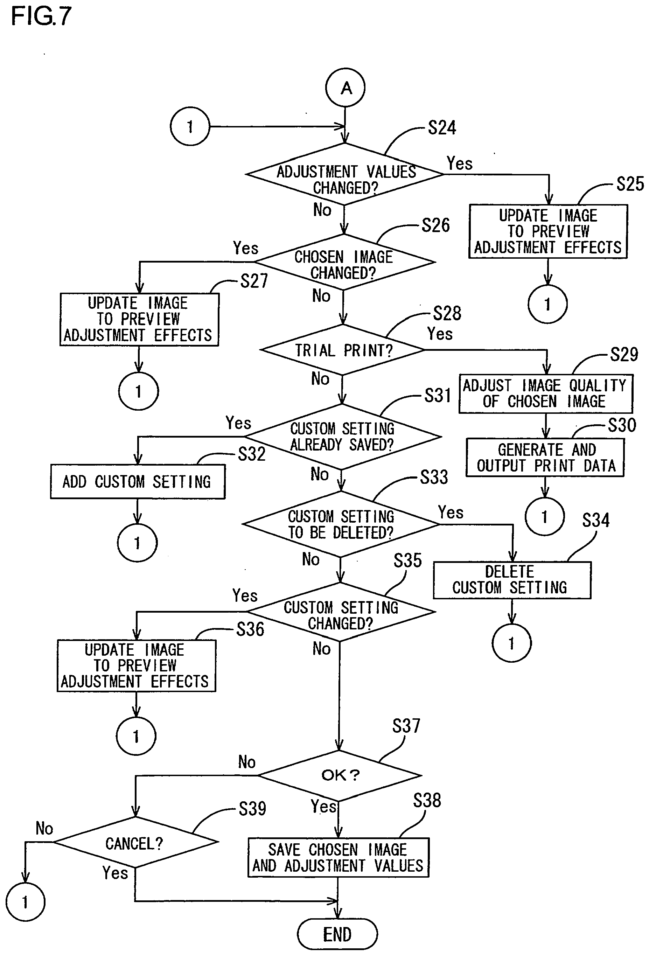

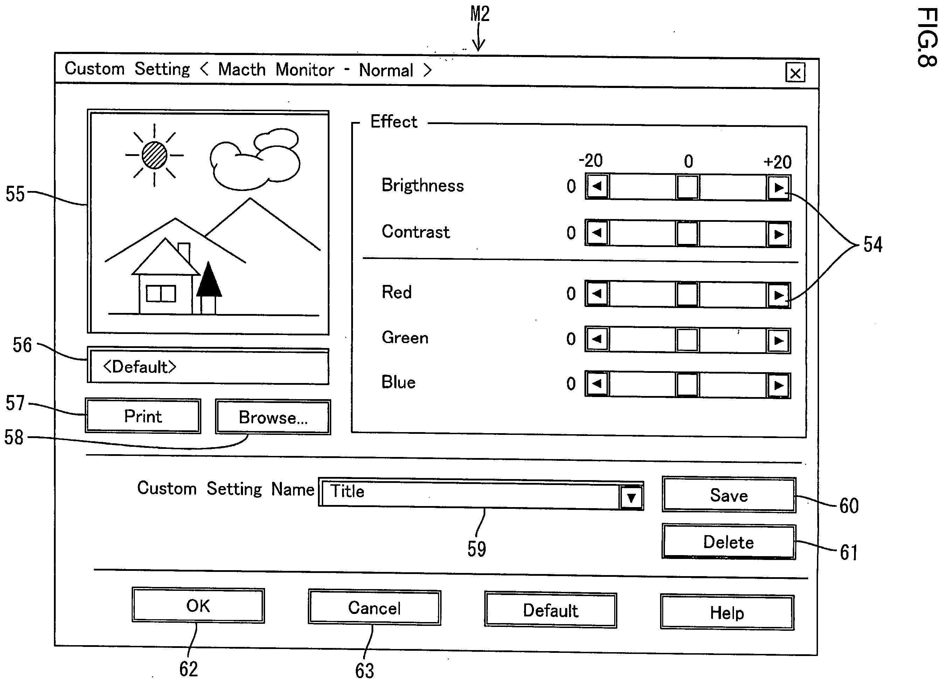

FIGS. 6 and 7 are flowcharts showing the flow of custom setting processing, while FIG. 8 is a diagram showing a custom setting screen. When the custom setting button 48 is clicked on the print setting screen M1, the following custom setting processing is executed. In the custom setting processing, first adjustment values corresponding to a current selected print mode and image data corresponding to a saved image name are read with reference to the saved data as described above (S21). Subsequently, the image is adjusted based on the adjustment values read for the saved image data, and image data is created for display of an image to preview adjustment effects described below (S22).

Next, a custom setting screen M2 shown in FIG. 8 is displayed on the display part 12 (S23). On the upper right of the custom setting screen M2, there are provided five scroll bars 54 to set parameters of brightness, contrast, a red component, a green component and a blue component. On the left, there are provided an image display portion 55 to display an image to preview adjustment effects. On the lower part, there is provided a name display portion 56 to display a name of the image to preview adjustment effects. The image display portion 55 is configured to display an image with adjusted image quality of image data that has been chosen (chosen image data). Immediately after the custom setting screen M2 is displayed, the portion 55 displays an image based on the image data created at S22 as described above. Under the name display portion 56, there are provided a trial print button 57 to print an image according to preview adjustment effects and a browse button 58 to change the image.

Further, in the lower part of the custom setting screen M2, a list display portion 59 is provided. The portion 59 is configured to list and display all custom setting names saved as the above described saved data for a selected print mode. Additionally, in the list display portion 59, characters can be inputted and one of the listed and displayed custom setting names can be selected. On the right of the list display portion 59, there are provided a save button 60 to save custom setting and a delete button 61 to delete custom setting. At the bottom of the custom setting screen M2, there are provided an OK button 62, a cancel button 63 and other buttons.

If the positions of the scroll bars 54 are changed while the custom setting screen M2 is displayed (S24: Yes), the image quality of chosen image data (original data of an image being currently displayed in the image display portion 55) is adjusted based on adjustment values corresponding to the changed positions. Then, an image subjected to the image quality adjustment is displayed as an image to preview adjustment effects in the image display portion 55 (S25).

If the browse button 58 is clicked on the custom setting screen M2, a dialog (not shown) to designate the position of image data is displayed. A user can arbitrarily choose image data recorded on the hard disk 16 or other computers 10 connected to the network 30 through the dialog. When image data is chosen (S26: Yes), the image data is read, the image quality is adjusted based on adjustment values being currently set, an image subjected to the image quality adjustment is displayed as an image to preview adjustment effects in the image display portion 55, and a name of the image data is displayed in the name display portion 56 (S27).

If the trial print button 57 is clicked (S28: Yes), the image quality is adjusted for chosen image data based on adjustment values being currently set (S29), print data is generated based on image data subjected to the image quality adjustment, and the print data is outputted to the printer 20 via the network interface 17 (S30). When the printer 20 receives the print data, it prints and outputs an image corresponding to the print data (i.e., an image corresponding to an image to preview adjustment effects) on a recording medium through the printing part 22.

If certain characters are inputted as a custom setting name to the list display portion 59 and the save button 60 is clicked (S31: Yes), then the inputted custom setting name, and its correlated print mode being currently selected, chosen image name and adjustment values are added to the saved data described above (S32). If there is already the same custom setting name when the save button 60 is clicked (S31: Yes), then the above saved data is updated with that custom setting name and its correlated print mode being currently selected, chosen image name and adjustment values (S32). If the delete button 61 is clicked (S33), custom setting information corresponding to a custom setting name being currently displayed in the list display portion 59 is deleted from saved data (S34).

If one of custom setting names, being in an unselected state, is selected in the list display portion 59, or the selected custom setting name is changed in the portion 59 (S35: Yes), then adjustment values and a saved image name corresponding to the selected custom setting name are read from saved data, the image quality is adjusted based on the adjustment values read for the saved image data, and an image after the image quality adjustment is displayed as an image to preview adjustment effects in the image display portion 55 (S36).

If the OK button 62 is clicked on the custom setting screen M2 (S37: Yes), then adjustment values being set through the scroll bars are saved as adjustment values for the print mode to saved data, a name of the chosen image being currently displayed in the image display portion 55 is saved as a saved image name for the print mode to saved data, and custom setting being currently selected is saved as selective custom setting to the saved data (S38). Then, the custom setting processing ends and returns to the print setting screen M1. If the cancel button 63 is clicked (S39: Yes), adjustment values are not saved and the custom setting processing ends and returns to the print setting screen M1.

### (Export Processing)

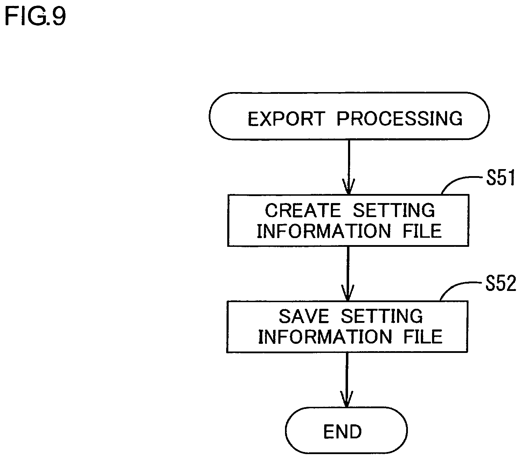

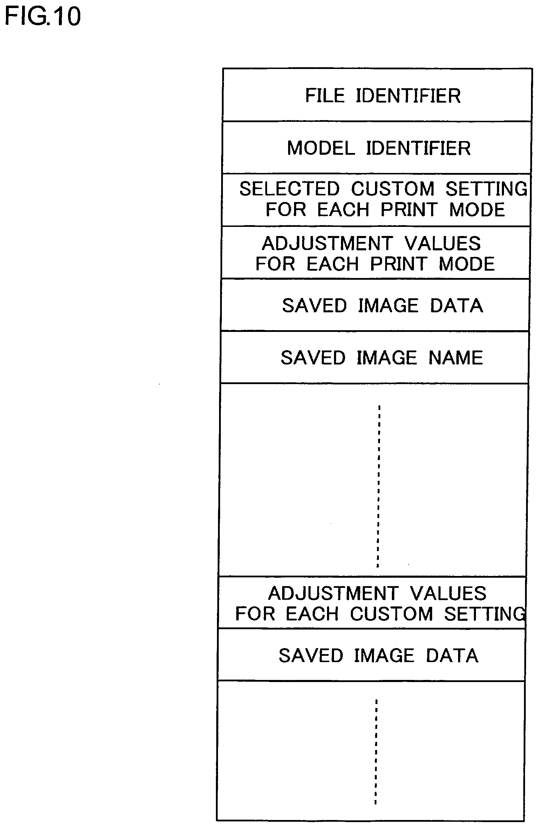

FIG. 9 is a flowchart showing the flow of export processing, while FIG. 10 is a diagram briefly illustrating contents of a detailed setting information file. If the export button 50 is clicked on the print setting screen M1, the export processing is executed.

In the export processing, first a setting information file described below is created with reference to saved data (S51). A setting information file has, for example, structure as shown in FIG. 10. As shown in the drawing, the file comprises a file identifier to indicate that it is a setting information file, and a model identifier to indicate a printer model corresponding to a printer driver for creating a setting information file (an example of "identification information"). A setting information file further comprises selected custom setting for each of print modes, an adjustment value set corresponding to the print mode, a saved image name corresponding to the print mode, and saved image data (bit map data) corresponding to the print mode. A file further comprises an adjustment value set corresponding to saved custom setting, and saved image data (bit map data) corresponding to the custom setting.

After a setting information file as described above is created, a dialog (not shown) to designate a destination for saving (outputting) is displayed. If a user designates a destination for saving, a setting information file is saved (S52). As a destination for saving, for example, the hard disk drive 16 of the computer 10, hard disks of other computers connected to the network 30, or a region on the NVRAM 26 of the printer 20 can be designated. Then, the export processing ends and returns to the print setting screen M1.

### (Import Processing)

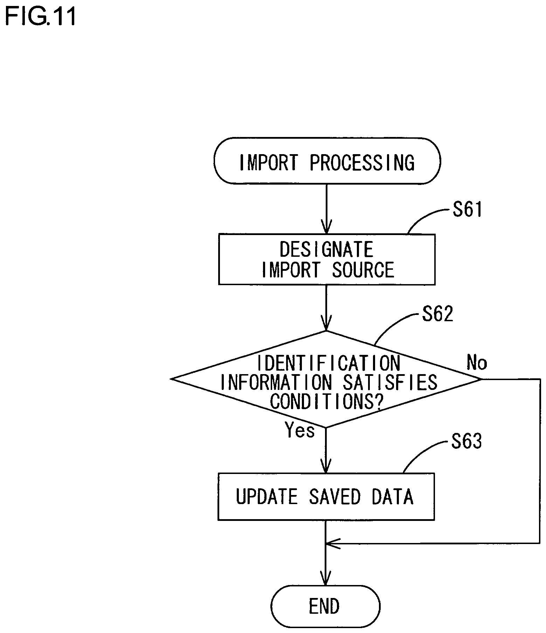

FIG. 11 is a flowchart showing the flow of import processing. If the import button 49 is clicked on the print setting screen M1, the import processing is executed. In the import processing, first a dialog (not shown) to designate the location of a setting information file being an import source is displayed (S61). As an import source, for example, the hard disk drive 16 of the computer 10, hard disks of other computers connected to the network 30, or a region on the NVRAM 26 of the printer 20 can be designated.

Subsequently, a file identifier and a model identifier of a designated setting information file are checked. Then it is determined whether or not the identifiers satisfy prescribed conditions (i.e., whether or not the designated file is a setting information file and its model information is for a model which the printer driver is compatible with) (S62). If the setting information file satisfies the prescribed conditions (S62: Yes), contents of saved data are rewritten based on contents of the setting information file (S63). Then, the import processing ends to return to the print setting screen M1. If the setting information file does not satisfy the prescribed conditions (S62: No), the saved data is not updated and the import processing ends to return to the print setting screen M1.

### 3. Processing of a Printer Driver Installation Program

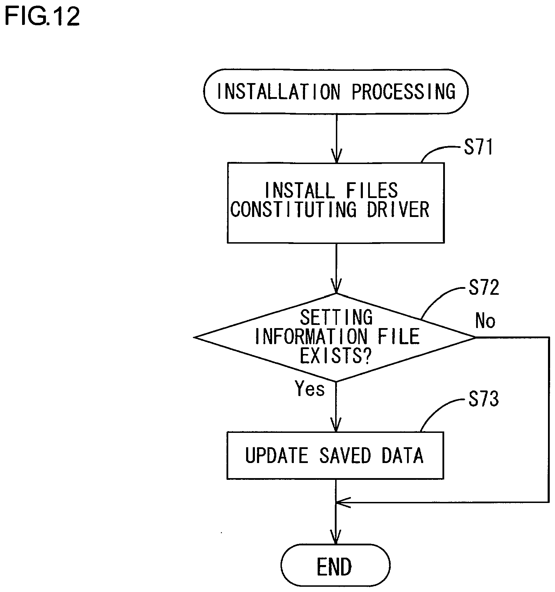

Next, processing of an installation program to install the above printer driver on a computer (an example of an "installation program for an image data output program") will be described. FIG. 12 is a flowchart showing the flow of the installation processing of the installation program.

The installation program, which is stored on the hard disk drive 16 of the computer 10, on hard disks of other computers on the network 30 or on the NVRAM 26 of the printer 20, is loaded on the RAM 14 through control by the CPU 15, whereby the program is started up and executes the following installation processing.

In the installation processing, files constituting the printer driver are first installed on the hard disk 16 (S71). Next, it is checked whether or not a setting information file is on a predetermined location (S72). A predetermined location can be, for example, in the same directory as an installation program or a predetermined location on the hard disk drive 16, or can be designated arbitrarily by a user.

If there is a setting information file (S72: Yes), then saved data of driver setting information stored on the hard disk 16 is rewritten based on contents of the setting information file (S73) and the installation processing ends. If there is no setting information (S72: No), saved data is not rewritten and the installation processing ends.

As described above, in accordance with this illustrative aspect, an image chosen arbitrarily by a user can be displayed to preview effects of the image quality adjustment, thereby allowing more appropriate adjustment of the image quality.

Conveniently, chosen image data can be saved, added to, changed and deleted.

Saved image data is stored in a state of being related with an adjustment value set; for example, saved image data and an adjustment value set corresponding to each kind of an image (text, photograph, logo or the like) are stored. As such, if an adjustment value set suitable for a kind of an image to be printed is selected upon printing, saved image data corresponding to the set is displayed as an image to preview adjustment effects, and thus the image quality can be easily adjusted.

Since there are provided functions to input and output (import and export) setting information, the same setting can be easily shared among a plurality of printer drivers.

The printer 20 can maintain setting information. As such, when a plurality of computers 10 share the same printer 20, the computers 10 can share the same setting far more easily.

Further, accidental or inappropriate settings can be prevented since setting information is restricted in use if identification information attached to the setting information does not satisfy prescribed conditions.

Setting information contains model information of the printer 20 as identification information, thereby preventing the same setting from being applied to other models of printers with different print features.

Since saved image data subjected to image quality adjustment, can be actually printed on a recording medium to preview effects of the image quality adjustment, the image quality can be adjusted more appropriately.

When a printer driver is installed, an adjustment value set and its corresponding saved image data are automatically saved, thereby making printer driver setting easy.

Though the above illustrative aspect has shown an example in which the computer 10 adjusts the image quality of image data to be a print target, a printing system can also be possible in which the printer 20 adjusts the image quality in accordance with the present invention. In that case, for example, the computer 10 adjusts the image quality of chosen image data through control by the CPU 15 (an example of a temporal adjusting part), but does not adjust the image quality for image data of a print target, and outputs the image data and image quality adjustment information such as parameter setting values to the printer 20. On the other hand, the printer 20 can be configured to adjust the image quality of image data received based on its image quality adjustment information through control by the CPU 25 (an example of an adjusting part) to create print data and to execute printing by the printing part 22.

Although the above illustrative aspect has described various parameters to adjust the image quality, other parameters such as saturation, color conversion, error diffusion, density or gradation, for example, other than the above examples can be used to adjust the image quality.

## Claims

1. An image data output device (10) comprising:
a control part (15) executing print setting processing that sets adjustment values utilized to adjust image quality of object image data that is to be printed;
a choosing part (11) choosing one of a plurality of kinds of test image data;
a saving part (16) saving the test image data chosen by the choosing part and configured to have the saved test image data added, changed and deleted;
an inputting part for inputting the adjustment values;
an adjusting part (15) adjusting the test image data chosen by the choosing part based on the adjustment values that are input by the inputting part and set for the chosen test image data, the adjusting part further adjusting the object image data based on the adjustment value that is set for the chosen test image data;
a display part (12) displaying the chosen test image data adjusted based on the adjustment values by the adjusting part to preview adjustment effects for the test image data, wherein the test image displayed on the display reflects image quality adjustment made by said adjusting part (15); and
a data outputting part (17) outputting the object image data that has been adjusted by said adjusting part (15) to a printing device (20)
**characterized in that**
the display part (12) displays :
scroll bars (54) to set adjustment values and
a browse button (58) for displaying and changing the chosen test image adjusted based on the adjustment values by the adjusting part to preview adjustment effects for the test image data;
when the browse button (58) is clicked, the display part (12) displays a dialog to designate the position of the test image data for choosing the test image data recorded on a hard disk or other computers connected to a network; and
a trial print button (57)) configured to output said saved test image data of the image quality adjusted by said adjusting part (15) to said printing device (20) using said data outputting part (17) to execute the printing; and
a save button (60) configured to save the adjustment values to a storage region (26) in said printing device (20); and
a delete button (61) to delete the saved adjustment values;
the choosing part chooses one of the plurality of kinds of test image data based on a user's arbitrary instruction and wherein said choosing part (11) is able to choose saved test image data corresponding to the adjustment value set selected by said setting part (11)
and
further including a setting information outputting part (15) that is able to output setting information containing said adjustment value set and said saved test image data related with the value set and
wherein
a setting information inputting part (15) is able to cause said setting part (11) to store said adjustment value set based on said inputted setting information, and said saving part to save said saved test image data corresponding to the adjustment value set and
said setting information is attached with identification information, and said setting information inputting part (15) causes said setting part (11) to store said adjustment value set and said saving part (16) to save said saved test image data if said identification information satisfies prescribed conditions and does not cause said setting part (11) to store said adjustment value set or said saving part (16) to save said saved test image data if said identification information does not satisfy prescribed conditions and
said identification information includes model information of said printing device.

2. A non-transitory computer readable recording medium storing an image data output program, which, when executed, causes a computer having a display part (12) and connected to a printing device (20) to execute print setting processing for setting adjustment values utilized to adjust image quality of object image data to be printed and data output processing for outputting the object image data whose image quality has been adjusted based on the adjustment values set in the print setting processing, the print setting processing comprising the steps of:
choosing test image data out of one of a plurality of kinds of test image data based on a user's arbitrary instruction ;
saving the test image data chosen by the choosing part and configured to have the saved test image data added, changed and deleted;
inputting adjustment values;
adjusting the test image data chosen by the choosing part based on the adjustment values that are input by the inputting part set for the chosen test image data, the adjusting part further adjusting the object image data based on the adjustment value that is set for the chosen test image data, and
displaying on the display part (12) the chosen test image data adjusted based on the adjustment values by the adjusting part to preview adjustment effects for the test image data, and
displaying on the display part (12) scroll bars (54) to set adjustment values and
displaying on the display part (12) a browse button (58) for displaying and changing the chosen test image adjusted based on the adjustment values by the adjusting part to preview adjustment effects for the test image data;
when the browse button (58) is clicked, the display part (12) displays a dialog to designate the position of the test image data for choosing the test image data recorded on a hard disk or other computers connected to a network; and
displaying on the display part (12) a trial print button (57)) configured to output said saved test image data of the image quality adjusted by said adjusting part (15) to said printing device (20) using said data outputting part (17) to execute the printing; and
displaying on the display part (12) a save button (60) configured to save the adjustment values to a storage region (26) in said printing device (20); and
displaying on the display part (12) a delete button (61) to delete the saved adjustment values
wherein the image displayed on the display part (12) reflects the adjustment made by said adjusting step and
outputting setting information containing said adjustment value set and said saved test image data related with the value set and
causing said setting part (11) to store said adjustment value set based on said inputted setting information and said saving part to save said saved test image data corresponding to the adjustment value set and not causing said setting part (11) to store said adjustment value set or said saving part (16) to save said saved test image data if said identification information does not satisfy prescribed conditions and
said identification information includes model information of said printing device.

3. A computer readable recording medium storing an installation program for the image data output program stored in the computer readable recording medium of claim 2, the installation program being a program which, when executed, causes a computer to execute:
reading processing to read the image data output program from the computer readable recording medium of claim 2;
installation processing to install said image data output program; and auto saving processing to cause said setting part to store said adjustment value set based on setting information containing said adjustment value set and said saved test image data related with the value set, and the computer to save said saved test image data corresponding to the adjustment value set.

4. A printing system comprising an image data output device (10) according to claim 1 and a printing device (20) connected to be able to communicate with each other,
the image data output device (10) further comprising:
a setting information outputting part (15) for outputting setting information containing the adjustment value set and the related saved test image data to an external device; and
a setting information inputting part (15) that causes said saving part (16) to save said adjustment value set and the saved test image data corresponding to the adjustment value set based on the setting information;
the printing device comprising:
a printing part (22) that can print the adjusted object image data outputted from said data outputting part; and
a storage region (26) that can store said setting information.

## Patentansprüche

1. Bilddatenausgabevorrichtung (10), aufweisend:
einen Steuerteil (15), der eine Druckeinstellungsverarbeitung ausführt, durch die Anpassungswerte eingestellt werden, die verwendet werden, um die Bildqualität von Objektbilddaten zum Drucken anzupassen;
einen Auswahlteil (11), der eine aus einer Mehrzahl von Arten von Testbilddaten auswählt;
einen Speicherungsteil (16), der die vom Auswahlteil ausgewählten Testbilddaten speichert, die so ausgelegt sind, dass gespeicherte Testbilddaten hinzugefügt, geändert und gelöscht werden können;
einen Eingabeteil zum Eingeben der Anpassungswerte;
einen Anpassungsteil (15), der die vom Auswahlteil ausgewählten Testbilddaten auf Basis der vom Eingabeteil eingegebenen und für die ausgewählten Testbilddaten eingestellten Anpassungswerte anpasst, wobei der Anpassungsteil ferner die Objektbilddaten auf Basis des für die ausgewählten Testbilddaten eingestellten Anpassungswerts anpasst;
einen Anzeigeteil (12), der die vom Anpassungsteil auf Basis der Anpassungswerte angepassten Testbilddaten anzeigt, um Anpassungseffekte für die Testbilddaten als Vorschau zu zeigen, wobei die auf der Anzeige angezeigten Testbilddaten eine vom Anpassungsteil (15) durchgeführte Bildqualitätsanpassung widerspiegeln, und
einen Datenausgabeteil (17), der die vom Anpassungsteil (15) angepassten Objektbilddaten an eine Druckvorrichtung (20) ausgibt,
**dadurch gekennzeichnet, dass**
der Anzeigeteil (12) anzeigt:
Rollbalken (54), um Anpassungswerte einzustellen, und
eine Browse-Schaltfläche (58) zum Anzeigen und Ändern der ausgewählten, vom Anpassungsteil auf Basis der Anpassungswerte angepassten Testbilddaten, um Anpassungseffekte für die Testbilddaten in einer Vorschau zu zeigen;
wobei der Anzeigeteil (12), wenn auf die Browse-Schaltfläche (58) geklickt wird, einen Dialog zum Angeben der Position der Testbilddaten anzeigt, um die auf einer Festplatte oder auf anderen, vernetzten Computern aufgezeichneten Testbilddaten auszuwählen; und
eine Probedruck-Schaltfläche (57), die dafür ausgelegt ist, die gespeicherten Testbilddaten mit der vom Anpassungsteil (15) angepassten Bildqualität unter Verwendung des Datenausgabeteils (17) an die Druckvorrichtung (20) auszugeben, um das Drucken auszuführen; und
eine Speichern-Schaltfläche (60), die dafür ausgelegt ist, die Anpassungswerte in einer Speicherregion (26) der Druckvorrichtung (20) zu speichern; und
eine Löschen-Schaltfläche (61), um die gespeicherten Anpassungswerte zu löschen;
wobei der Auswahlteil eine von der Mehrzahl von Arten von Testbilddaten auf Basis einer im Belieben eines Anwenders stehenden Anweisung auswählt, und wobei der Auswahlteil (11) in der Lage ist, gespeicherte Testbilddaten auszuwählen, die einem vom Einstellungsteil (11) ausgewählten Anpassungswertesatz entsprechen,
und
ferner einen Einstellungsinformationenausgabeteil (15) aufweisend, der in der Lage ist, Einstellungsinformationen auszugeben, die einen Einstellungswertesatz und die mit dem Wertesatz in Beziehung stehenden gespeicherten Testbilddaten enthalten,
und
wobei
ein Einstellungsinformationeneingabeteil (15) in der Lage ist zu bewirken, dass der Einstellungsteil (11) den Anpassungswertesatz auf Basis der eingegebenen Einstellungsinformationen abspeichert und dass der Speicherungsteil die gespeicherten Testbilddaten, die dem Anpassungswertesatz entsprechen, speichert, und
den Einstellungsinformationen Identifizierungsinformationen beigefügt sind und der Einstellungsinformationeneingabeteil (15) bewirkt, dass der Einstellungsteil (11) den Anpassungswertesatz abspeichert und der Speicherungsteil (16) die gespeicherten Testbilddaten speichert, wenn die Identifizierungsinformationen vorgegebene Bedingungen erfüllen, und nicht bewirkt, dass das Einstellungsteil (11) den Anpassungswertesatz abspeichert oder dass das Speicherungsteil (16) die gespeicherten Testbilddaten speichert, wenn die Identifizierungsinformationen die vorgegebenen Bedingungen nicht erfüllen, und
die Identifizierungsinformationen Modellinformationen über die Druckvorrichtung enthalten.

2. Nichtflüchtiges computerlesbares Aufzeichnungsmedium, auf dem ein Bilddatenausgabeprogramm gespeichert ist, das, wenn es ausgeführt wird, bewirkt, dass ein Computer, der einen Anzeigeteil (12) aufweist und mit einer Druckvorrichtung (20) verbunden ist, folgendes ausführt: eine Druckeinstellungsverarbeitung zum Einstellen von Anpassungswerten, die verwendet werden, um eine Bildqualität von Objektbilddaten zum Drucken anzupassen, und eine Datenausgabeverarbeitung zum Ausgeben der Objektbilddaten, deren Bildqualität auf Basis der in der Druckeinstellungsverarbeitung eingestellten Anpassungswerte angepasst worden ist, wobei die Druckeinstellungsverarbeitung die folgenden Schritte umfasst:
Auswählen von Testbilddaten aus einer von einer Mehrzahl von Arten von Testbilddaten auf Basis einer im Belieben eines Anwenders stehenden Anweisung;
Sichern der von einem Auswahlteil ausgewählten Testbilddaten, die so ausgelegt sind, dass die gespeicherten Testbilddaten hinzugefügt, geändert und gelöscht werden können;
Eingeben von Anpassungswerten;
Anpassen der vom Auswahlteil ausgewählten Testbilddaten auf Basis der vom Eingabeteil eingegebenen, für die ausgewählten Testbilddaten eingestellten Anpassungswerte, wobei der Anpassungsteil ferner die Objektbilddaten auf Basis des für die ausgewählten Testbilddaten eingestellten Anpassungswerts anpasst, und
Anzeigen der vom Anpassungsteil auf Basis der Anpassungswerte angepassten ausgewählten Testbilddaten auf dem Anzeigeteil (12), um Anpassungseffekte für die Testbilddaten in einer Vorschau zu zeigen; und
Anzeigen von Rollbalken (54) auf dem Anzeigeteil (12), um Anpassungswerte einzustellen, und
Anzeigen einer Browse-Schaltfläche (58) auf dem Anzeigeteil (12), um das ausgewählte Testbild anzuzeigen und auf Basis der vom Anpassungsteil angepassten Anpassungswerte zu ändern, um Anpassungseffekte für die Testbilddaten als Vorschau zu zeigen;
wobei der Anzeigeteil (12), wenn die Browse-Schaltfläche (58) angeklickt wird, einen Dialog zum Angeben der Position der Testbilddaten anzeigt, um die auf einer Festplatte oder auf anderen, vernetzten Computern aufgezeichneten Testbilddaten auszuwählen; und
Anzeigen einer Probedrucken-Schaltfläche (57) auf dem Anzeigeteil (12), die dafür ausgelegt ist, die gespeicherten Testbilddaten mit der vom Anpassungsteil (15) angepassten Bildqualität unter Verwendung des Datenausgabeteils (17) an die Druckvorrichtung (20) auszugeben, um das Drucken auszuführen; und
Anzeigen einer Speichern-Schaltfläche (60) auf dem Anzeigeteil (12), die dafür ausgelegt ist, die Anpassungswerte in einer Speicherregion (26) in der Druckvorrichtung (20) zu speichern; und
Anzeigen einer Löschen-Schaltfläche (61) auf dem Anzeigeteil (12), um die gespeicherten Anpassungswerte zu löschen,
wobei das Bild, das auf dem Anzeigeteil (12) angezeigt wird, die Anpassung widerspiegelt, die im Anpassungsschritt vorgenommen worden ist, und
Ausgeben von Einstellungsinformationen, die den Anpassungswertesatz und die gespeicherten Testbilddaten enthalten, die mit dem Wertesatz in Beziehung stehen, und
Bewirken, dass der Einstellungsteil (11) den Anpassungswertesatz auf Basis der eingegebenen Einstellungsinformationen abspeichert und der Speicherungsteil die gespeicherten Testbilddaten, die dem Anpassungswertesatz entsprechen, speichert, und Nichtbewirken, dass der Einstellungsteil (11) den Anpassungswertesatz abspeichert oder der Speicherungsteil (16) die gespeicherten Testbilddaten speichert, wenn die Identifizierungsinformationen vorgegebene Bedingungen nicht erfüllen, und
wobei die Identifizierungsinformationen Modellinformationen der Druckvorrichtung beinhalten.

3. Computerlesbares Aufzeichnungsmedium, das ein Installationsprogramm für ein auf dem computerlesbaren Aufzeichnungsmedium gespeichertes Bilddatenausgabeprogramm speichert, nach Anspruch 2, wobei das Installationsprogramm ein Programm ist, das bei seiner Ausführung bewirkt, dass ein Computer folgendes ausführt:
eine Leseverarbeitung, um das Bilddatenausgabeprogramm aus dem computerlesbaren Aufzeichnungsmedium nach Anspruch 2 zu lesen;
eine Installationsverarbeitung, um das Bilddatenausgabeprogramm zu installieren; und eine automatische Speicherverarbeitung, um zu bewirken, dass der Einstellungsteil den Anpassungswert auf Basis von Einstellungsinformationen, die den Anpassungswertesatz und die gespeicherten Testbilddaten, die mit dem Wertesatz in Beziehung stehen, enthalten, abspeichert und dass der Computer die gespeicherten Testbilddaten, die dem Anpassungswertesatz entsprechen, speichert.

4. Drucksystem, eine Bilddatenausgabevorrichtung (10) nach Anspruch 1 und eine Druckvorrichtung (20) aufweisend, die so verbunden sind, dass sie miteinander kommunizieren können,
wobei die Bilddatenausgabevorrichtung (10) ferner aufweist:
einen Einstellungsinformationenausgabeteil (15) zum Ausgeben von Einstellungsinformationen, die den Anpassungswertesatz und die damit in Beziehung stehenden gespeicherten Testbilddaten enthalten, an eine externe Vorrichtung; und
einen Einstellungsinformationeneingabeteil (15), der bewirkt, dass der Speicherungsteil (16) den Anpassungswertesatz und die gespeicherten Testbilddaten, die dem auf den Einstellungsinformationen basierenden Anpassungswertesatz entsprechen, speichert;
wobei die Druckvorrichtung aufweist:
einen Druckerteil (22), der die vom Datenausgabeteil ausgegebenen Objektbilddaten drucken kann; und
eine Speicherregion (26), welche die Einstellungsinformationen abspeichern kann.

## Revendications

1. Périphérique de sortie de données d'image (10) comprenant :
une partie de commande (15) exécutant un traitement de paramétrage d'impression qui paramètre des valeurs de réglage utilisées pour régler la qualité d'image de données d'image d'objet qui doivent être imprimées ;
une partie de sélection (11) sélectionnant l'un d'une pluralité de types de données d'image de test ;
une partie de sauvegarde (16) sauvegardant les données d'image de test sélectionnées par la partie de sélection et configurée de manière à comprendre les données d'image de test ajoutées, modifiées et effacées ;
une partie d'entrée destinée à entrer les valeurs de réglage ;
une partie de réglage (15) assurant le réglage des données d'image de test sélectionnées par la partie de sélection sur la base des valeurs de réglage qui sont entrées par la partie d'entrée et définies pour les données d'image de test sélectionnées, la partie de réglage assurant en outre le réglage des données d'image d'objet sur la base de la valeur de réglage qui est définie pour les données d'image de test sélectionnées ;
une partie d'affichage (12) affichant les données d'image de test sélectionnées, réglées sur la base des valeurs de réglage par la partie de réglage afin de visualiser préalablement les effets de réglage pour les données d'image de test, dans lequel l'image de test affichée sur le périphérique d'affichage reflète le réglage de qualité d'image réalisé par ladite partie de réglage (15) ; et
une partie de sortie de données (17) délivrant les données d'image d'objet qui ont été réglées par ladite partie de réglage (15) vers un périphérique d'impression (20)
**caractérisé en ce que**
la partie d'affichage (12) affiche :
des barres de défilement (54) afin de définir les valeurs de réglage et
un bouton de navigation (58) destiné à afficher et modifier l'image de test sélectionnée réglée sur la base des valeurs de réglage par la partie de réglage afin de visualiser préalablement les effets de réglage pour les données d'image de test ;
lorsque le bouton de navigation (58) est activé, la partie d'affichage (12) affiche un dialogue afin de définir la position des données d'image de test pour sélectionner les données d'image de test enregistrées sur un disque dur ou d'autres ordinateurs raccordés à un réseau ; et
un bouton d'impression de test (57) configuré de manière à délivrer lesdites données d'image de test sauvegardées, de la qualité d'image réglée par ladite partie de réglage (15), audit périphérique d'impression (20) en utilisant ladite partie de sortie de données (17) afin d'exécuter l'impression ; et
un bouton de sauvegarde (60) configuré de manière à sauvegarder les valeurs de réglage sur une zone de mémorisation (26) dans ledit périphérique d'impression (20) ; et
un bouton d'effacement (61) destiné à effacer les valeurs de réglage sauvegardées ;
la partie de sélection sélectionne l'un de la pluralité de types de données d'image de test sur la base d'une instruction arbitraire d'utilisateur et dans lequel ladite partie de sélection (11) peut sélectionner des données d'image de test sauvegardées correspondant au jeu de valeurs de réglage sélectionné par ladite partie de paramétrage (11) et
comportant en outre une partie de sortie d'informations de paramétrage (15) qui peut délivrer des informations de paramétrage contenant ledit jeu de valeurs de réglage et lesdites données d'image de test sauvegardées associées au jeu de valeurs et
dans lequel
une partie d'entrée d'informations de paramétrage (15) peut conduire ladite partie de paramétrage (11) à mémoriser ledit jeu de valeurs de réglage sur la base desdites informations de paramétrage entrées, et ladite partie de sauvegarde à sauvegarder lesdites données d'image de test sauvegardées, correspondant au jeu de valeurs de réglage et
lesdites informations de paramétrage sont liées aux informations d'identification, et ladite partie d'entrée d'informations de paramétrage (15) conduit ladite partie de paramétrage (11) à mémoriser ledit jeu de valeurs de réglage et ladite partie de sauvegarde (16) à sauvegarder lesdites données d'image de test sauvegardées si lesdites informations d'identification satisfont des conditions prédéfinies et ne conduit pas ladite partie de paramétrage (11) à mémoriser ledit jeu de valeurs de réglage ou ladite partie de sauvegarde (16) à sauvegarder lesdites données d'image de test sauvegardées si lesdites informations d'identification ne satisfont pas des conditions prédéfinies et
lesdites informations d'identification comportent des informations de modèle dudit périphérique d'impression.

2. Support d'enregistrement non volatile pouvant être lu par ordinateur mémorisant un programme de sortie de données d'image, qui, lorsqu'il est exécuté, conduit un ordinateur, comportant une partie d'affichage (12) et couplé à un périphérique d'impression (20), à exécuter un traitement de paramétrage d'impression destiné à paramétrer des valeurs de réglage utilisées afin de régler la qualité d'image de données d'image d'objet à imprimer et un traitement de sortie de données destiné à délivrer les données d'image d'objet dont la qualité d'image a été réglée sur la base du jeu de valeurs de réglage dans le traitement de paramétrage d'impression, le traitement de paramétrage d'impression comprenant les étapes de :
sélection de données d'image de test parmi l'un d'une pluralité de types de données d'image de test sur la base d'une instruction arbitraire d'utilisateur ;
sauvegarde des données d'image de test sélectionnées par la partie de sélection et configurées de manière à comporter les données d'image de test sauvegardées, modifiées et effacées ;
entrée de valeurs de réglage ;
réglage des données d'image de test sélectionnées par la partie de sélection sur la base des valeurs de réglage qui sont entrées par la partie d'entrée, définies pour les données d'image de test sélectionnées, la partie de réglage assurant en outre le réglage des données d'image d'objet sur la base de la valeur de réglage qui est définie pour les données d'image de test sélectionnées, et
affichage, sur la partie d'affichage (12), des données d'image de test sélectionnées, réglées sur la base des valeurs de réglage par la partie de réglage afin de visualiser préalablement des effets de réglage pour les données d'image de test, et
affichage sur la partie d'affichage (12) de barres de défilement (54) afin de définir des valeurs de réglage et
affichage sur la partie d'affichage (12) d'un bouton de navigation (58) destiné à afficher et modifier l'image de test sélectionnée (12) réglée sur la base des valeurs de réglage par la partie de réglage afin de visualiser préalablement les effets de réglage pour les données d'image de test;
lorsque le bouton de navigation (58) est activé, la partie d'affichage (12) affiche un dialogue permettant de définir la position des données d'image de test afin de sélectionner les données d'image de test enregistrées sur un disque dur ou d'autres ordinateurs couplés à un réseau ; et
affichage sur la partie d'affichage (12) d'un bouton d'impression de test (57) configuré de manière à délivrer lesdites données d'image de test sauvegardées de la qualité d'image réglée par ladite partie de réglage (15) audit périphérique d'impression (20) en utilisant ladite partie de sortie de données (17) afin d'exécuter l'impression ; et
affichage sur la partie d'affichage (12) d'un bouton de sauvegarde (60) configuré de manière à sauvegarder les valeurs de réglage sur une zone de mémorisation (26) dans ledit périphérique d'impression (20) ; et
affichage, sur la partie d'affichage (12), d'un bouton d'effacement (61) afin d'effacer les valeurs de réglage sauvegardées,
dans lequel l'image affichée sur la partie d'affichage (12) reflète le réglage réalisé par ladite étape de réglage et
sortie d'informations de paramétrage contenant ledit jeu de valeurs de réglage et lesdites données d'image de test sauvegardées associées au jeu de valeurs et
mémorisation par ladite partie de paramétrage (11) dudit jeu de valeurs de réglage sur la base desdites informations de paramétrage entrées et sauvegarde par ladite partie de sauvegarde desdites données d'image de test sauvegardées, correspondant au jeu de valeurs de réglage et non mémorisation par ladite partie de paramétrage (11) dudit jeu de valeurs de réglage ou par ladite partie de sauvegarde (16) desdites données d'image de test sauvegardées si les informations d'identification ne satisfont pas les conditions prédéfinies, et
lesdites informations d'identification comportent des informations de modèle dudit périphérique d'impression.

3. Support d'enregistrement pouvant être lu par ordinateur mémorisant un programme d'installation du programme de sortie de données d'image mémorisé sur le support d'enregistrement pouvant être lu par ordinateur selon la revendication 2, le programme d'installation étant un programme qui, lorsqu'il est exécuté, provoque l'exécution par un ordinateur :
d'un traitement de lecture destiné à lire le programme de sortie de données d'image à partir du support d'enregistrement pouvant être lu par ordinateur selon la revendication 2 ;
d'un traitement d'installation destiné à installer ledit programme de sortie de données d'image ; et d'un traitement de sauvegarde automatique destiné à provoquer la mémorisation par ladite partie de paramétrage dudit jeu de valeurs de réglage sur la base d'informations de paramétrage contenant ledit jeu de valeurs de réglage et lesdites données d'image de test sauvegardées associées au jeu de valeurs, et la sauvegarde par l'ordinateur desdites données d'image de test sauvegardées correspondant au jeu de valeurs de réglage.

4. Dispositif d'impression comprenant un périphérique de sortie de données d'image (10) selon la revendication 1 et un périphérique d'impression (20) couplés de manière à pouvoir communiquer l'un avec l'autre,
le périphérique de sortie de données d'image (10) comprenant en outre :
une partie de sortie d'informations de paramétrage (15) destinée à délivrer des informations de paramétrage contenant le jeu de valeurs de réglage et les données d'image de test sauvegardées à un périphérique externe ; et
une partie d'entrée d'informations de paramétrage (15) qui conduit ladite partie de sauvegarde (16) à sauvegarder ledit jeu de valeurs de réglage et les données d'image de test sauvegardées correspondant au jeu de valeurs de réglage sur la base des informations de réglage ;
le périphérique d'impression comprenant :
une partie d'impression (22) qui permet d'imprimer les données d'image d'objet réglées délivrées à partir de ladite partie de sortie de données; et
une zone de mémorisation (26) qui peut mémoriser lesdites informations de réglage.
